# EUROPEAN PATENT APPLICATION

(11) **EP 1 986 134 A1**
(43) Date of publication of application: **29.10.2008**
(21) Application number: 08003496.0
(22) Date of filing: 26.02.2008
(51) Int. Cl.: G06K 17/00

(54) **Machine element control apparatus using RFID tag and machine element control using the same**

(30) Priority: 25.04.2007 JP 2007114989
(71) Applicant: Hitachi, Ltd., Chiyoda-ku Tokyo 100-8280 (JP)
(72) Inventor: Ashizawa, Minoru, Tokyo 100-8220 (JP)
(74) Representative: Strehl, Peter

(57) **Abstract**

In a machine element control method, when conducting maintenance and inspection of a machine element assembly such as a plant to be operated for a long period of time exceeding life of RFID tags, to enable use of the RFID tags to identify respective machine elements, new RFID tags are additionally attached and a correspondence with respect to the RFID tags are stored and verified.

## Description

### BACKGROUND OF THE INVENTION

The present invention relates to a technique to control equipment or machine elements by use of tags respectively attached thereto, and in particular, to a technique to employ Radio Frequency IDentification (RFID) tags to control machine elements constituting a machine element assembly. In this connection, the term "assembly of machine elements" includes, for example, a plant, a production line, a factory, or an office.

Since a machine element assembly such as a plant conducts its operation for a long period of time, e.g., several tens of years, it is quite important to control machine elements constituting the assembly. According to the prior art, a maintenance and inspection schedule is manually created by use of drawings or plans drawn on sheets of paper and a ledger. When a maintenance and inspection job is carried out, each location indicated by an information item instructed according to the maintenance and inspection schedule is visually determined and identified by an operator for maintenance and inspection, and results of the job are recorded in the ledger. The job is visually and manually carried out, and hence there exist fears of an error in the maintenance and inspection schedule and an error in identification of each location and a fear of occurrence of missing items indispensable for the maintenance and inspection. To verify such errors and missing items, there has been required a large amount of human power.

Recently, designing information has been increasingly processed using electronic data by, for example, a Computer Assisted Design (CAD). Therefore, it is going to be broadly employed to produce a maintenance and inspection schedule on the basis of the electronic data of designing information. However, the identification of a location is visually conducted by an operator. This leads to a problem of an error in the location identification. To cope with this problem, there has been proposed a method in which a bar code tag or an Integrated Circuit (IC) tag is attached onto a location or a machine element to be inspected to thereby assist the identification of the location.

Prior arts associated with the method include, for example, JP-A-2002-265020, JP-A-8-221480, JP-A-2004-334890, JP-A-2004-334891, JP-A-2004-334892, JP-A-2000-339020, and JP-A-2003-132167.

### SUMMARY OF THE INVENTION

However, the prior arts are attended with a problem in which consideration has not been given to possibility of failure in an RFID tag.

While the machine element assembly such as a plant continuously carries out operation for a long period of time, for example, several tens of years, the RFID tag has life of about ten years. Therefore, it is considerable that such RFID tag to identify a location or a machine element possibly fails after a lapse of time associated with its life. This leads to a problem that none of the prior arts serves its function after a lapse of a long period of time.

It is therefore an object of the present invention to provide a technique to control by use of an RFID tag a machine element (to be referred to as a super-long-life machine element in the present specification) to be used for a long period of time exceeding life of the RFID tag.

The object is achieved by monitoring a state of deterioration of an RFID tag and by conducting control on the basis of the state. For example, there are prepared a plurality of RFID tags including first RFID tags and second RFID tags such that a first RFID tag stores information in association with machine element (control) information. If data cannot be read from the first RFID tag, a control operation is performed to establish a correspondence between data of a second RFID tag and the machine element information. The present invention includes aspects as follows.

According to an embodiment of the present invention, the object is achieved by a long-file machine element control apparatus or controller 1003 including a control database unit 1009, a maintenance and inspection information input unit 1007, an RFID tag ID reader unit 1008, a CAD data acquiring, converting, and editing unit 1004, a time generator unit 1006, a maintenance and inspection schedule creating and editing unit 1005, and a maintenance and inspection report generator unit 1010. The term "long life" does not define "life", i.e., the period of time of "life", and hence the controller 1003 may control also machine elements having so-called shorter life.

According to the present invention, in maintenance and inspection of machine elements or locations included in a machine element assembly such as a plant which carries out operation for a long period of time exceeding life of RFID tags, it is possible to employ an RFID tag as identification or a trace of an inspection target or object. This leads to an advantage that the maintenance and inspection job can be conducted with improved precision and efficiency.

Other objects, features and advantages of the invention will become apparent from the following description of the embodiments of the invention taken in conjunction with the accompanying drawings.

### BRIEF DESCRIPTION OF THE DRAWINGS

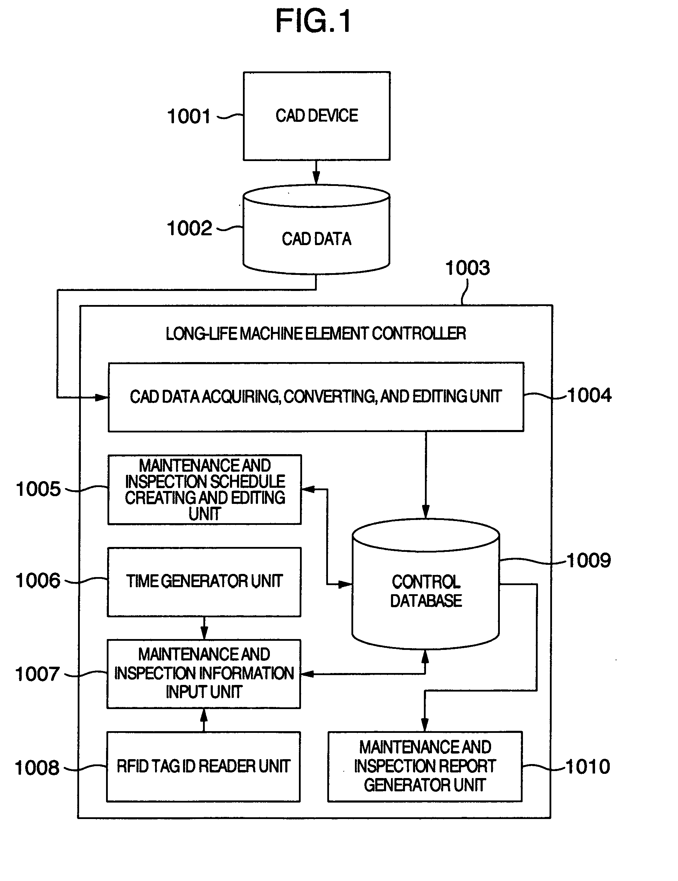

FIG. 1 is a block diagram showing an embodiment of a long-life machine element controller according to the present invention;
FIG. 2 is a table partially showing the contents of a database in the controller of FIG. 1;
FIG. 3 is a table partially showing the contents of a database in the controller of FIG. 1;
FIG. 4 is a table partially showing the contents of a database in the controller of FIG. 1;
FIG. 5 is a table partially showing the contents of a database in the controller of FIG. 1;
FIG. 6 is a table partially showing the contents of a database in the controller of FIG. 1;
FIG. 7 is a flowchart partially showing a flow of operation in the controller of FIG. 1;
FIG. 8 is a flowchart partially showing a flow of operation in the controller of FIG. 1;
FIG. 9 is a flowchart partially showing a flow of operation in the controller of FIG. 1;
FIG. 10 is a flowchart partially showing a flow of operation in the controller of FIG. 1;
FIG. 11 is a flowchart partially showing a flow of operation in the controller of FIG. 1; and
FIG. 12 is a flowchart partially showing a flow of operation in the controller of FIG. 1.

### DESCRIPTION OF THE EMBODIMENTS

In the embodiment, the CAD data acquiring, converting, and editing unit 1004 reads CAD data 1002, i.e., designing data created by a CAD device 1001 disposed outside the controller 1003 to convert and to edit the data and stores resultant designing data in the control database unit 1009. However, the CAD device 1001 may be integrally configured in the machine element controller 1003. The maintenance and inspection schedule creating and editing unit 1005 creates and edits a maintenance and inspection schedule on the basis of the CAD data stored in the control database unit 1009 and then stores the schedule in the control database 1009. The RFID tag reader unit 1008 reads an RFID tag ID. The maintenance and inspection information input unit 1007 displays the maintenance and inspection schedule stored in the database 1009. The input unit 1007 also receives an input of information of maintenance and inspection findings. The time generator unit 1006 generates information of time. The input unit 1007 stores in the control database unit 1009 information of the inspection indication, information of the maintenance and inspection findings, the RFID tag ID, and the time information with a correspondence established therebetween. The maintenance and inspection report generator unit 1010 can create and display the time information, the maintenance and inspection schedule, and the information of the maintenance and inspection findings. Therefore, for example, it is possible that while attaching RFID tags onto locations and machine elements as maintenance and inspection objects during a construction phase, a report of results of maintenance and inspection can be created. Hence, after the job, a person other than the operator is able to inspect and to verify integrity of the job.

After the processing described above, the maintenance and inspection schedule creating and editing unit 1005 can again create and edit a maintenance and inspection schedule based on the CAD data to store the obtained schedule in the control database 1009. By making the RFID tag ID reader 1008 read RFID tag IDs from the RFID tags attached onto the locations and the machine elements as inspection objects, the schedule creating and editing unit 1005 can display the maintenance and inspection schedule and inspection items stored in the control database 1009 with a correspondence established with respect to the RFID tag IDs. Therefore, for example, when one year lapses after completion of a construction of an assembly, it is possible to assist identification of locations and machine elements as objects of maintenance and inspection of the assembly.

In the maintenance and inspection when one year lapses after the construction of the assembly, if the reader unit 1008 cannot read an RFID tag (1) for the identification of a location or a machine element, an operation is conducted in almost the same way as for the operation to attach the RFID tag at construction described above to read an RFID tag ID of a new RFID tag (2) to store the associated information with a correspondence established as above. That is, the maintenance and inspection information input unit 1007 displays the maintenance and inspection schedule stored in the database 1009 and also receives an input of information of maintenance and inspection findings. The time generator unit 1006 generates information of time. The input unit 1007 stores in the control database unit 1009 information of the inspection indication, information of the maintenance and inspection findings, the RFID tag ID, and the time information with a correspondence established therebetween. The maintenance and inspection report generator unit 1010 can create and display the time information, the maintenance and inspection schedule, and the information of the maintenance and inspection findings. Therefore, even if, for example, the RFID tag (1) is deteriorated with a lapse of time and fails, it is possible that while attaching a new RFID tag onto a location or a machine element as a maintenance or inspection object, a report of results of maintenance and inspection can be created. Hence, after the job, a person other than the operator is able to inspect and to verify integrity of the job.

Additionally, in the maintenance and inspection when one year lapses after the construction of the assembly, also if the reader unit 1008 can read an RFID tag (1) for the identification of a location or a machine element, the operation is advantageously applicable. That is, the RFID tag reader 1008 reads an RFID tag ID from the new RFID tag (3). The maintenance and inspection information input unit 1007 stores in the control database 1009 information of the inspection indication, information of the maintenance and inspection findings, the RFID tag (1), the RFID tag (3), and the ID time information with a correspondence established therebetween. By attaching the RFID tag (3) onto a target machine element or a location, it is possible to make an evidence of maintenance or inspection at the actual place. Therefore, after the job, a person other than the operator is able to inspect and to verify integrity of the job.

As above, in a situation in which a new RFID tag (2) is installed during the RFID tag (1) is in failure and in which the RFID tag (3) is installed as an evidence of maintenance or inspection, when the information input unit 1007 retrieves information of an indication of inspection stored in the control database 1009 with a correspondence established with respect to the RFID tag ID (1) and displays the information, it is possible to detect a correspondence error in the correspondence to thereby delete associated information of maintenance and inspection findings. That is, if an error occurs during the job, the operator can confirm the job by himself or herself to again conduct the job.

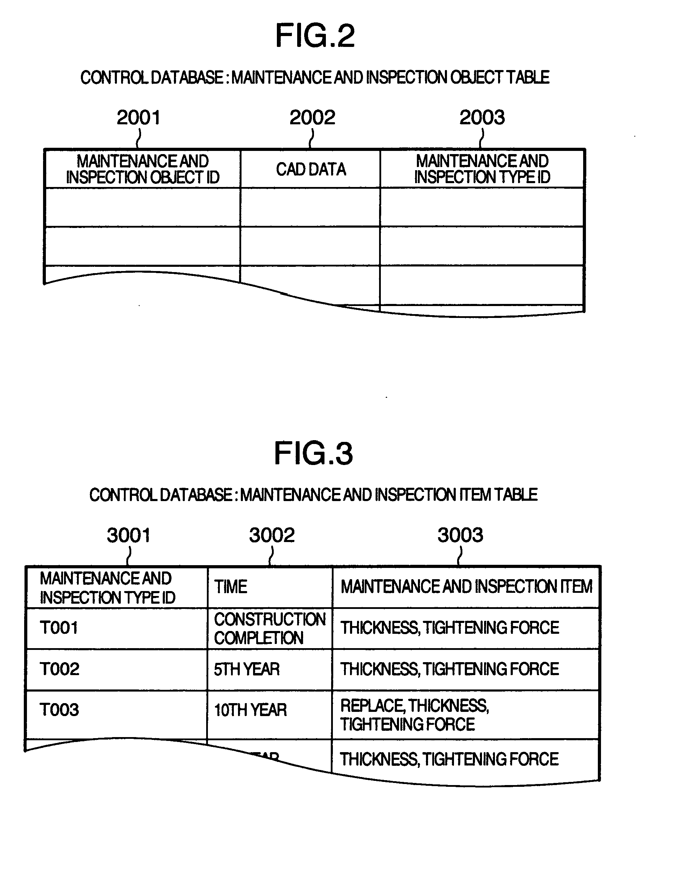

When the CAD data acquiring, converting, and editing unit 1004 acquires the CAD data of design information created by the CAD device 1001 to convert and to edit the data and stores the resultant data in the database 1009, it is possible to employ a maintenance and inspection object table (FIG. 2) including a maintenance and inspection ID field 2001, a CAD data filed 2002, a maintenance and inspection type ID field 2003 and a maintenance and inspection item table (FIG. 3) including a maintenance and inspection type ID field 3001, a time field 3002, and a maintenance and inspection item field 3003.

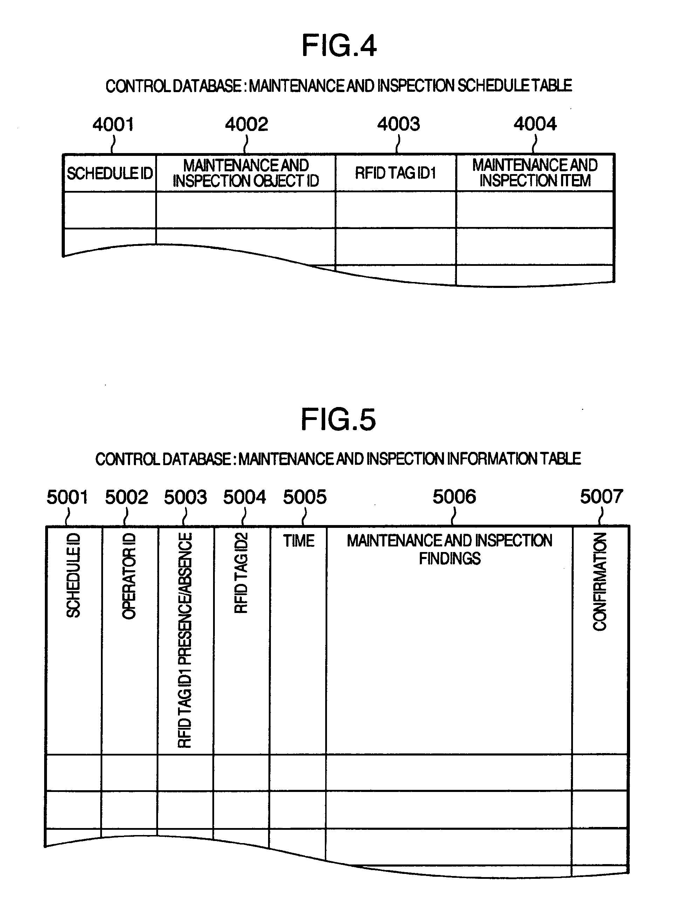

When the maintenance and inspection schedule creating and editing unit 1005 creates and edits a maintenance and inspection schedule on the basis of the CAD data in the database 1009 to store the schedule in the database 1009, there may be used a maintenance and inspection schedule table (FIG. 4) including a schedule ID field 4001, a maintenance and inspection object ID field 4003, an ID tag ID field 4003, and a maintenance and inspection item field 4004.

Also, when the maintenance and inspection information input unit 1007 receives an input of information of maintenance and inspection findings to store the information in the database 1009 with a correspondence established with respect to various information items as above, it is possible to employ a maintenance and inspection information table (FIG. 5) including a schedule ID field 5001, an operator ID field 5002, an RFID tag ID1 presence/absence field 5003, an RFID tag ID2 presence/absence field 5004, a time field 5005, an maintenance and inspection finding filed 5006, and a confirmation field 5007.

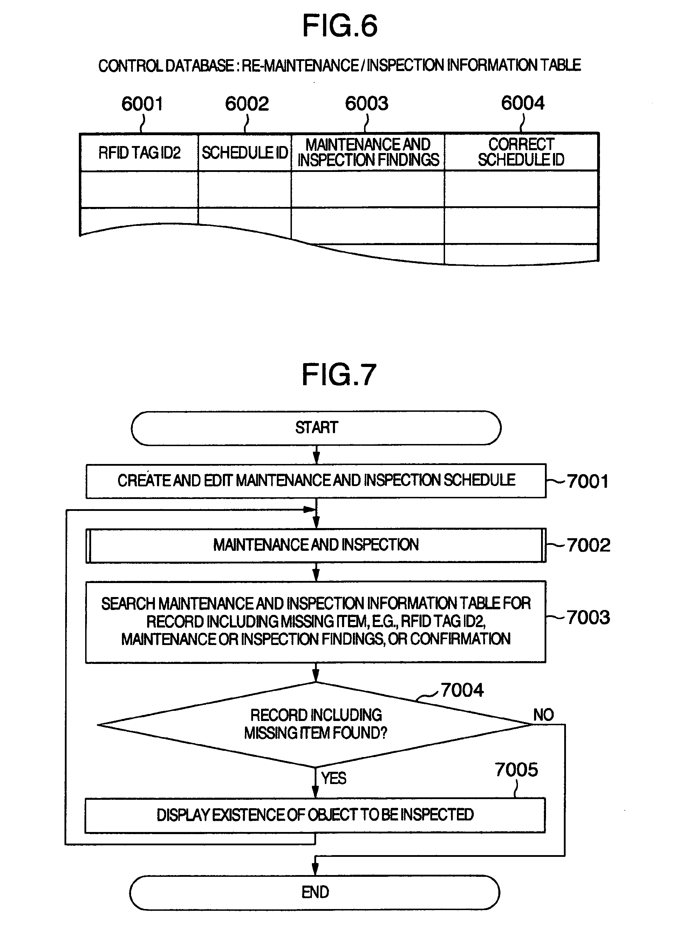

When the maintenance and inspection information input unit 1007 detects an error in the correspondence to delete associated information of maintenance and inspection findings, there may be created a re-maintenance-and-inspection information table (FIG. 6) including an RFID tag ID 2 field 6001, a schedule ID field 6002, a maintenance and inspection finding field 6003, and a correct (or corrected) schedule ID field 6004 to thereby assist recording errors and correcting errors. The operation is also included in the scope of the present embodiment.

Description will now be given in detail of operation of the long-life machine element controller 1003 by referring to flowcharts. However, there will not be given of description of operation in which the CAD data acquiring, converting, and editing unit 1004 acquires the CAD data 1002 as designing data produced by the external CAD device to convert and to edit the data and stores the resultant data in the control database 1009 to thereby create a maintenance and inspection object table. Subsequent operation will be described by referring to FIG. 7.

In step 7001 for "maintenance and inspection schedule creation", the maintenance and inspection schedule creating and editing unit 1005 creates and edits a maintenance and inspection schedule table (FIG. 4) on the basis of the CAD data stored in the control database unit 1009. In this situation, if there exists a maintenance and inspection schedule table (FIG. 4) or a maintenance and inspection information table (FIG. 5) associated with a maintenance and inspection job in the past, the unit 1005 collects, on the basis of the values respectively of the maintenance and inspection object ID field 4002 and the schedule ID field 4001 of respective tables associated with the maintenance and inspection job in the past, an RFID tag ID of an RFID tag attached to a location indicated by the value of the maintenance and inspection object ID field 4002 from the RFID tag ID1 field 4003 or the RFID tag ID2 field 5004 and then stores the ID in the RFID tag ID1 field of the maintenance and inspection schedule table just created and edited.

In step 7002 for "maintenance and inspection", operations such as operation to read an RFID tag and operation to input maintenance and inspection finding information are executed. Details of the step will be described later.

In step 7003 for "non-inputted record retrieval", a retrieval operation is made through the maintenance and inspection information table for a record in which data, for example, data of "RFID tag ID2", "maintenance and inspection findings", or "confirmation" has not been inputted. If such record is absent in step 7004, the processing is terminated. Otherwise, control goes to step 7005 to display presence of a non-inputted record and then the processing goes to step 7002. In step 7005, there may be additionally conducted an operation to display the contents of the maintenance and inspection information table (FIG. 6) to urge the operator for error correction.

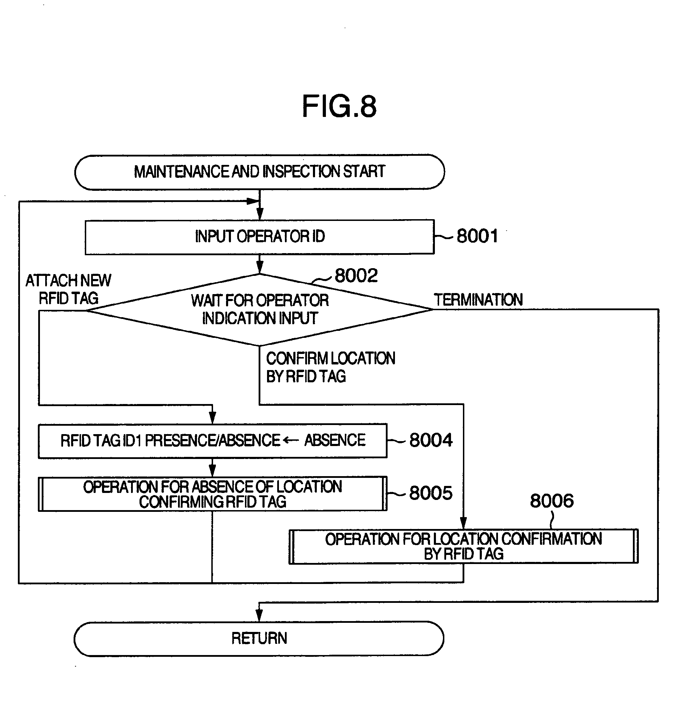

Referring next to FIG. 8, description will be given in detail of step 7002 for "maintenance and inspection".

In step 8001 to input an operator ID, the maintenance and inspection information input unit 1007 receives an input of an operator ID. In step 8002, the information input unit 1007 receives an indication from the operator, the indication instructing whether the processing is to be terminated, to attach a new RFID tag, or to confirm a location according to an RFID tag. If the processing is to be terminated, the processing of FIG. 8 is terminated and control returns to the processing of FIG. 7.

If the processing is to attach a new RFID tag, "absence" is set to an RFID tag ID 1 presence/absence field 5003 as preparation for subsequent processing to be executed later. The system executes processing of step 8005 for "absence of location confirming RFID tag" and then terminates the processing flow of FIG. 8 to return to the flow of FIG. 7. If the processing is to confirm a location using an RFID tag, a location is confirmed using an RFID tag in step 8006. The processing is then terminated and control returns to the processing of FIG. 7.

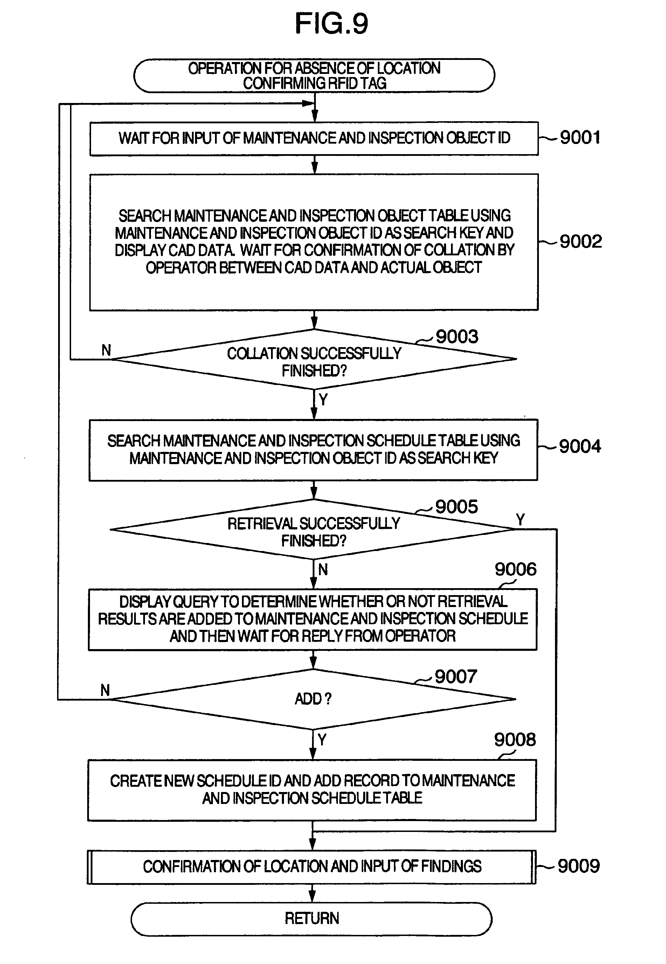

By referring to FIG. 9, description will be given in detail of operation for absence of a location confirming RFID tag in step 8005.

In step 9001 for "wait for maintenance and inspection object input", the maintenance and inspection information input unit 1007 receives an input of a maintenance and inspection object ID from the operator. In step 9002 for "collate and confirm location", the input unit 1007 searches the maintenance and inspection object table (FIG. 2) using the maintenance and inspection object ID as a search key to resultantly display CAD data. The operator visually collates the CAD data with an associated actual location to determine whether or not the location or an item for maintenance and inspection matches the maintenance and inspection object ID. In step 9003 for "collation confirmation", the input unit 1007 receives an input of the collation result from the operator. If the result indicates "failure (N)", control returns to step 9001 to wait for an input of a maintenance and inspection object ID. If the result indicates "success (Y)", control goes to step 9004 for "maintenance and inspection schedule retrieval" to search the maintenance and inspection schedule table for a record indicated by the maintenance and inspection object ID.

In step 9005, the information input unit 7 makes a check to determine whether or not a record has been successfully retrieved from the schedule table. If the retrieval fails (N), control goes to step 9006 in which the input unit displays a query to the operator to determine whether or not the contents of the maintenance and inspection for the object ID are to be added to the maintenance and inspection schedule and then receives an input in reply to the query. If the reply from the operator is "not to add the contents (N)" in step 9007, control returns to step 9001. If the reply from the operator is "add the contents (Y)" in step 9007, control proceeds to step 9003 for "confirm location and input findings".

In step 9005, if the retrieval is successfully finished (Y), control goes to step 9009 for "confirm location and input findings".

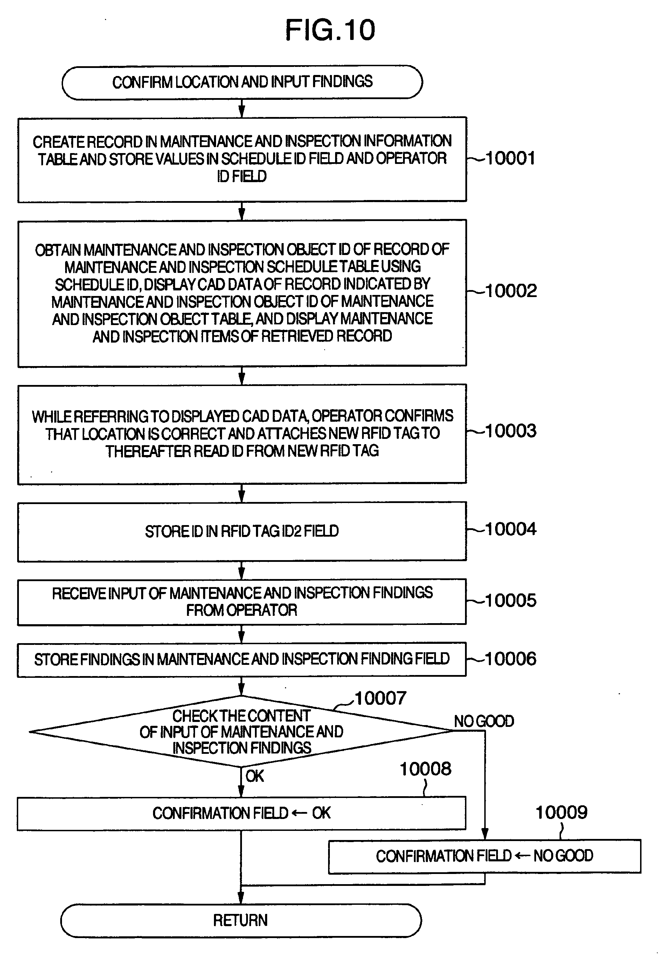

Referring next to FIG. 10, description will be given in detail of step 9009.

In step 10001 for "create record for maintenance and inspection information table", the information input unit 1007 creates a record and fills the schedule ID field 4001 of the maintenance and inspection information table with the value of the schedule ID field 4001 of the recorded retrieved in step 9004. The input unit 1007 also stores a maintenance and inspection object ID for reception of an input from an operator.

In step 10002, the information input unit 1007 obtains a maintenance and inspection object ID of a record of the maintenance and inspection schedule table by use of the schedule ID, and displays CAD data 2002 of a record indicated by the maintenance and inspection object ID in the maintenance and inspection object table (FIG. 2) as well as the value of the maintenance and inspection item field 3003 of the retrieved record.

In step 10003 for "read RFID tag", the operator confirms that the location is correct by referring to the displayed CAD data, attaches a new RFID tag, and then reads an ID from the RFID tag by the RFID tag reader 1008.

In step 10004 for "store RFID tag ID", the obtained ID of the RFID tag is stored in the field 5004 of the RFID tag ID2.

In step 10005 for "receive input of maintenance and inspection findings", the information input unit 1007 receives an input of information of maintenance and inspection findings from the operator. In step 10006 for "store maintenance and inspection findings", information of maintenance and inspection findings inputted from the operator is stored in the maintenance and inspection finding field 5006. Time information generated by the time generator 1006 is stored in the time field 5005. The value indicating "presence" is set to the RFID tag ID1 presence/absence field 5003.

In step 10007 for "check the content of input of maintenance and inspection findings", the input unit 1007 receives the input of a confirmation result of maintenance and inspection obtained in steps 10005-10006. If the findings suggest "ACCEPTANCE", the value of the confirmation field 5007 is set to "OK" in step 10008. If the findings suggest "FAIL", the value of the confirmation field 5007 is set to "NO GOOD" in step 10009. "NO GOOD" resultant from step 1007 is a record indicating "conduct maintenance and inspection for the location and the machine element assembly later (or at an appropriate point of time)".

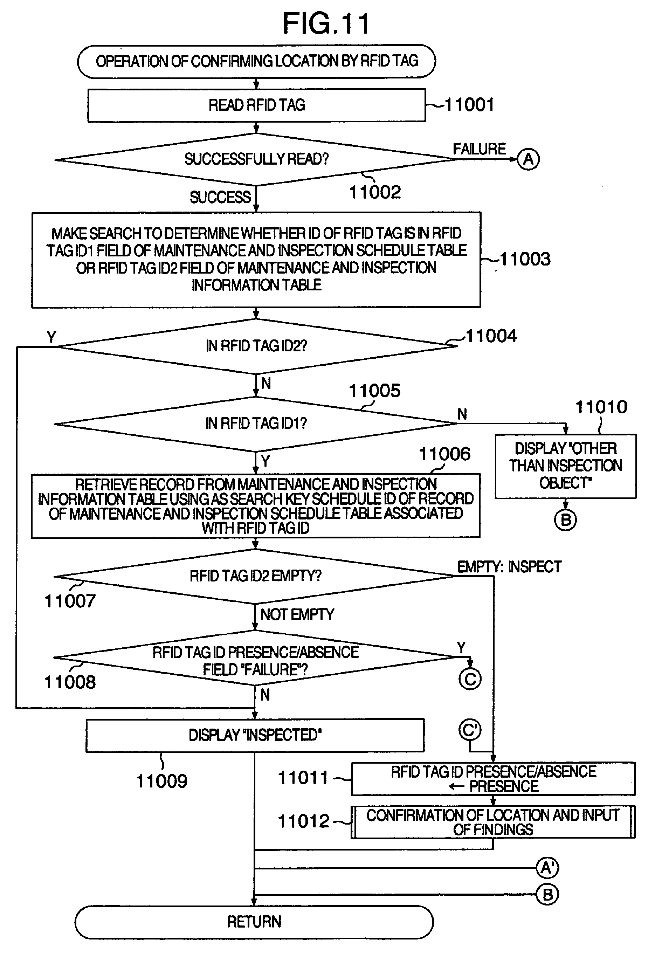

Referring to FIG. 11, description will be given in detail of step 8006 to confirm a location using an RFID tag.

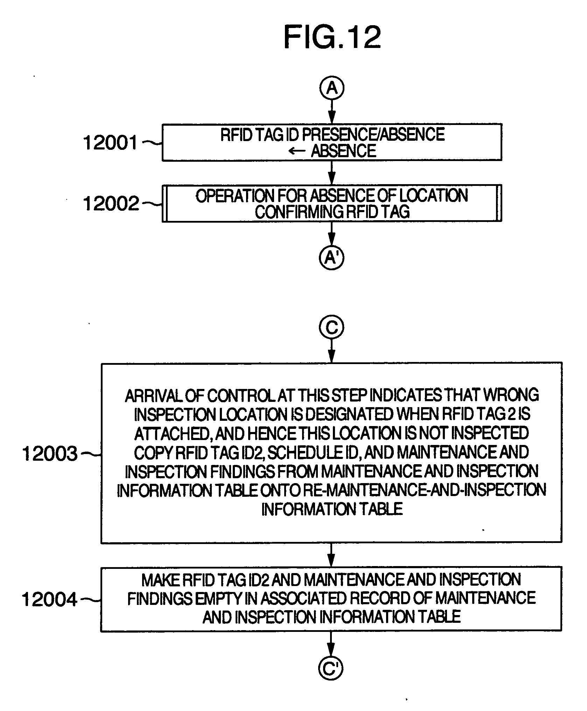

In step 11001, the RFID tag reader unit 1008 reads an RFID tag. In step 1102, a check is made to determine whether or not the RFID tag has been successfully read. If the read operation fails, control goes to step 12001 of FIG. 12 to prepare a condition to set "absence" to the value of the RFID tag ID1 presence/absence field 5003 in subsequent processing to be executed later. The processing then goes to step 12002 for "operation for absence of location confirming RFID tag". Processing in step 12002 is substantially equal to that in step 8005 and that shown in FIG. 9. Thereafter, the processing of FIG. 11 is terminated.

In step 11002, if the read operation has been successfully finished, control goes to step 11003 to make a search to determine whether the RFID tag ID thus obtained exists in the RFID tag ID1 field 4003 of the maintenance and inspection schedule table or the RFID tag ID2 field 5004 of the maintenance and inspection information table.

If the RFID tag ID is in the RFID tag ID2 field 5004, it is indicated that the inspection has been finished, and hence control goes to steps 1100. Thereafter, the processing is terminated.

In step 11003, if the RFID tag ID exists in none of the RFID tag ID2 field 5004 and the RFID tag ID1 field 4003, it is indicated that the RFID tag ID does not exist in the maintenance and inspection schedule and is hence other than the inspection objects. Therefore, control goes to step 11005. Thereafter, the processing is terminated.

In step 11003, if the RFID tag ID does not exist in the RFID tag ID2 field 5004, but exists in the RFID tag ID1 field 4003, it is indicated that the RFID tag ID is a candidate for the maintenance and inspection object. In step 11006, using as a search key the schedule ID field 4001 of a record of the maintenance and inspection schedule table associated with the RFID tag ID, a search is made through the maintenance and inspection information table (FIG. 5) for a record of which the schedule ID field 5001 matches the search key.

In step 11007, if the RFID tag ID2 field 5004 of the record of the maintenance and inspection information table (Fig. 5) as the retrieving in step 11006 is empty, it is determined that the location or the machine element is an inspection object. Hence, it is prepared that "presence" is set to the value of the RFID tag ID1 presence/absence field 5003 in subsequent processing to be executed later. Thereafter, control goes to step 11012 for "confirmation of location and input of findings".

Specific processing of step 11012 is similar to the processing shown in step 9003 and FIG. 10 described above.

If the RFID tag ID2 field 5004 of the record of the maintenance and inspection information table (Fig. 5) as the retrieving in step 11006 is not empty, control goes from step 11007 to step 11008 to check the value of the RFID tag ID1 presence/absence field 5003. If the value indicates failure, it is assumed that when the RFID tag including the RFID tag ID2 is attached, the RFID tag ID1 is not detected or the inspection is conducted mistakenly for other than the target location. That is, the maintenance and inspection has not been completed for the location and the machine element assembly. In this situation, control goes to step 12003 in which "RFID tag ID2", "schedule ID", and "maintenance and inspection findings" are copied from the maintenance and inspection information table (FIG. 5) onto the re-maintenance-and-inspection table (FIG. 6). In step 12004, in the maintenance and inspection information table, "RFID tag ID2" and "maintenance and inspection findings" are made to be empty. Control then goes to step 11011. Subsequent processing has already been described.

In step 11008, if the value of the RFID tag ID1 presence/absence field 5003 is other than the value indicating failure, that is, if the value is "presence" or "absence", it is indicated that the maintenance and inspection has been finished. Hence, the processing goes to step 11009 to display "completion of maintenance and inspection". Description has been given of an embodiment according to the present invention.

It should be further understood by those skilled in the art that although the foregoing description has been made on embodiments of the invention, the invention is not limited thereto and various changes and modifications may be made without departing from the spirit of the invention and the scope of the appended claims.

## Claims

1. A machine element control apparatus (1003) for assisting maintenance and inspection of machine elements constituting a machine element assembly, on the basis of designing information of the machine element assembly; comprising:
maintenance and inspection information input means (1007) capable of receiving an input of data and outputting data for inputting maintenance and inspection information;
control database means (1009) having stored therein the maintenance and inspection information and the designing information; and
Radio Frequency Identification (RFID) tag ID reader means (1008) capable of accessing an RFID tag having stored information for reading the information therefrom, wherein
the control database means stores therein a maintenance and inspection schedule created on the basis of the designing information;
the RFID tag ID reader means reads an RFID tag ID as the information; and
the maintenance and inspection information input means displays the maintenance and inspection schedule and inspection items stored in the control database means, receives an input of information of maintenance and inspection findings associated with the maintenance and inspection schedule and inspection items thus displayed, and stores information of an indication for inspection, the maintenance and inspection finding information, and the RFID tag ID in the control database means with a correspondence established therebetween.

2. A machine element control apparatus according to claim 1, wherein
the RFID tag ID reader means reads an RFID tag ID; and
the maintenance and inspection information input means searches the control database means for information of an inspection indication stored therein in association with the RFID tag ID and displays the information.

3. A machine element control apparatus according to claim 2, wherein:
the RFID tag ID reader means reads, if the RFID tag ID cannot be read, another RFID tag ID; and
the maintenance and inspection information input means stores the second RFID tag ID and information of maintenance and inspection findings in the control database means with a correspondence established therebetween.

4. A machine element control apparatus according to claim 2, wherein
the maintenance and inspection information input means searches, if the RFID tag ID can be read by the RFID tag ID reader means, the control database means for information of an inspection indication stored therein with a correspondence established with respect to the RFID tag ID and displays the information;
the RFID tag ID reader means reads another RFID tag ID; and
the maintenance and inspection information input means stores the RFID tag ID, said another RFID tag ID, and the information of maintenance and inspection findings in the control database means with a correspondence established therebetween.

5. A machine element control apparatus according to claim 4, wherein
when the maintenance and inspection information input means searches, if the RFID tag ID can be read by the RFID tag ID reader means, the control database means for information of an inspection indication stored therein with a correspondence established with respect to the RFID tag ID and displays the information; the maintenance and inspection information input means detects an error in the correspondence and deletes information of maintenance and inspection findings associated with the correspondence.

6. A machine element control method for use with a machine element control apparatus (1003) for assisting maintenance and inspection of machine elements constituting a machine element assembly, on the basis of designing information of the machine element assembly,
the machine element control apparatus comprising maintenance and inspection information input means (1007) capable of receiving an input of data and outputting data for inputting maintenance and inspection information, control database means (1009) having stored therein the maintenance and inspection information and the designing information, and RFID tag ID reader means (1008) capable of accessing an RFID tag having stored information for reading the information therefrom, the method comprising the steps of:
storing, by the control database means, a maintenance and inspection schedule created on the basis of the designing information;
reading, by the RFID tag ID reader means, an RFID tag ID as the information; and
displaying, by the maintenance and inspection information input means, the maintenance and inspection schedule and inspection items stored in the control database means, receiving an input of information of maintenance and inspection findings associated with the maintenance and inspection schedule and inspection items thus displayed, and storing information of an indication for inspection, the maintenance and inspection finding information, and the RFID tag ID in the control database means with a correspondence established therebetween.

7. A machine element control method according to claim 6, further comprising the steps of:
reading, by the RFID tag ID reader means, an RFID tag ID; and
searching, by the maintenance and inspection information input means, the control database means for information of an inspection indication stored therein in association with the RFID tag ID and displaying the information.

8. A machine element control method according to claim 7, further comprising the steps of:
reading by the RFID tag ID reader means, if the RFID tag ID cannot be read, another RFID tag ID; and
storing, by the maintenance and inspection information input means, said another RFID tag ID and information of maintenance and inspection findings in the control database means with a correspondence established therebetween.

9. A machine element control method according to claim 8, further comprising the steps of:
searching by the maintenance and inspection information input means, if the RFID tag ID can be read by the RFID tag ID reader means, the control database means for information of an inspection indication stored therein with a correspondence established with respect to the RFID tag ID and displaying the information;
reading another RFID tag ID by the RFID tag ID reader means; and
storing by the maintenance and inspection information input means, the RFID tag ID, said another RFID tag ID, and the information of maintenance and inspection findings in the control database means with a correspondence established therebetween.

10. A machine element control method according to claim 7, further comprising the steps of:
detecting; when the maintenance and inspection information input means searches, if the RFID tag ID can be read by the RFID tag ID reader means, the control database means for information of an inspection indication stored therein with a correspondence established with respect to the RFID tag ID and displays the information; by the maintenance and inspection information input means an error in the correspondence and deleting information of maintenance and inspection findings associated with the correspondence.
